# EUROPEAN PATENT SPECIFICATION

(11) **EP 1 543 595 B1**
(45) Date of publication and mention of the grant of the patent: **13.01.2010**
(21) Application number: 03798340.0
(22) Date of filing: 26.09.2003
(51) Int. Cl.: H01S 3/105

(54) **METHOD FOR SELECTING THE POLARIZATION OF THE LASER BEAM OSCILLATING INSIDE A LASER CAVITY**
VERFAHREN ZUR AUSWAHL DER POLARISATION EINES LASERSTRAHLS IN EINEM RESONATOR
PROCEDE DE SELECTION DE LA POLARISATION D'UN FAISCEAU LASER OSCILLANT DANS UNE CAVITE LASER

(30) Priority: 27.09.2002 IT TO20020845
(43) Date of publication of application: 22.06.2005
(73) Proprietor: BRIGHT SOLUTIONS SOLUZIONI LASER INNOVATIVE S:R.L., 27010 Cura Carpignano (PV) (IT)
(72) Inventor: AGNESI, Antoniangelo, I-27020 Torre Isola (IT); DELL'ACQUA, Stefano, I-27100 Pavia (IT); PICCINNO, Giuliano, I-27028 San Martino Siccomario (IT)
(74) Representative: Dini, Roberto
(86) International application number: PCT/IB2003/004239
(87) International publication number: WO 2004/030163

(56) References cited:
- EP-A- 0 596 714
- WO-A-01/20732
- US-A- 4 441 186
- US-A- 5 905 748
- KOECHNER: "Solid State Laser Engineering (4th edition) ISBN 3-540-60237-2" 1996, SPRINGER-VERLAG , BERLIN HEIDELBERG * page 465 - page 471 *

## Description

### DESCRIPTION

The present invention relates to a method for selecting the polarization of the laser beam inside a laser cavity, which provides generation of a laser beam inside said resonant laser cavity, comprising one or more birefringent optical media. In the development of solid state laser systems it proves often useful to select the polarization of the laser light generated inside the oscillator, i.e. in the laser cavity. The polarization state of the laser light, in fact, is particularly important in some applications of laser-matter interaction, such as non linear processes for generating higher harmonics or for parametric generation; in most cases, where the use of a polarized laser beam is required, it is convenient to select the polarization inside the oscillator rather than outside it. If the oscillator emits a non polarized beam, the external selection of the polarization entails a halving of the power available, whereas the inner selection will cause much minor losses: in this event, in fact, the active element in the cavity can use all of its own gain to the advantage of the polarization whose oscillation is allowed.

Moreover, many optoelectronic devices interacting with a laser beam (inside or outside the laser cavity) have a different behaviour according to the state and degree of the polarization of the incident laser light.

For instance, the electro-optical Q-switching modulator pertains to this category: since the polarization of the light crossing the modulator is altered by switching the modulator voltage, the Q-switching effect (i.e. modulation of the cavity losses) is reached causing the cavity to oscillate without losses on a well precise polarization, and do not oscillate on the orthogonal polarization (i.e. having high losses) due to a selection device. Modulation methods of the cavity losses through a polarization-selective element in the resonator may be employed for the so-called "mode-locking" operating mode to generate laser pulses lasting less than a nanosecond.

At least three different occurrences can be noticed where the designer has recourse to a polarization selector element in order to obtain a (linearly) polarized radiation from the oscillator, depending on the active material being used:
1) if the laser material is optically and thermo-mechanically isotropic, such as Nd:YAG, or anyway emitting a non polarized laser radiation (such as e.g. Nd:YVO₄ c-cut); in this case the polarizer element will force operation of a well determined polarization direction;
2) if the laser material is optically and/or thermo-mechanically anisotropic, such as Nd:YVO₄ and Nd:GdVO₄ a-cut, whose anisotropic properties will force the oscillation of a precise polarization; in this case, the polarizer element may be employed for improving the degree of spontaneous polarization or forcing the oscillation of the orthogonal polarization or of another polarization;
3) if the laser material is optically and/or thermo-mechanically anisotropic, and emits laser light of different wavelength or with different laser properties in the main directions of anisotropy, such as Nd:YLF, Nd:YVO or Nd:GVO; in this case, the polarizer element may be advantageously utilized for simultaneous selection of the polarization state, wavelength or other properties of the laser oscillation.

Conventionally, selection of the oscillating polarization occurs by means of optical elements causing a highly precise linear polarization (selection of an elliptic polarization is possible but generally not very useful). The common operating concept of these elements is based on the introduction of different losses for the light oscillating in the resonator on one or the other linear polarization.

Most common known polarizer devices utilize Fresnel transmission and reflection properties for surfaces inclined at the Brewster angle; as well known, when an unpolarized laser beam impinges on an optically dense plate (refractive index n) at an angle of incidence (measured with respect to the normal to the plate plane) equal to Brewster angle (which depends on the refractive index) the polarized beam component in the plane parallel to the Brewster angle is transmitted without losses, whereas the perpendicular component has power losses due to reflection depending on the refractive index n. By mean of on an appropriate material choice, it is possible to have the undesired polarization undergo enough losses to avoid reaching the laser threshold condition, whereas the main polarization oscillates freely. A typical manufacture of the device is to machine one or both faces of the active material so as to have the appropriate Brewster angle with respect to the direction of the mode propagation in the cavity.

More sophisticated devices are known, which utilize the properties of appropriate dielectric layers deposited on an optical surface in order to enhance the different transmission properties of the polarized light from an inclined surface: dielectric film polarizers (Brewster angle and 45° angle) belong to this category.

Other known polarizers operate according to the birefringence principle through the angular separation of the main polarization components. Such devices are e.g. Glan-Taylor, Glan-Thompson, Nicol, Wollaston and Rochon prisms, which consist of two calcite or calcite and quartz elements either stuck together or air-spaced.

These elements cannot be easily utilized in laser systems with a high average power due to rather high intrinsic losses and absorption. Also dichroic (polaroid) polarizers are not suggested for the same reason.

At the present state of the art it is clear how the sole selection methods of a preferential polarization state, practically performable in a laser with a high average power, require the use of specific dielectric elements or uncoated surfaces at the appropriate Brewster angle inside the resonator. The former are surely the most efficient ones due to their very high transmission contrast between the two orthogonal polarizations; however, (in general) their losses are not irrelevant for the oscillating polarization (typical 2-5%, a value often comparable with the transmission of the output coupler, so that a consistent amount of the extractible power is wasted); generally, they are expensive and relatively space requiring in a modern laser resonator. Conversely, a simple plate or surface at the Brewster angle has usually not enough contrast for selecting the polarization in a high gain oscillator; moreover, should said plate be integrated as the output face of the active medium, this would entail high manufacturing costs.

Document US 5,905,748 discloses that in low power laser systems operated in continuous wave and single longitudinal mode, the selection of the oscillating polarization can be obtained by means of a birefringent wedge.

It is the object of the present invention to solve the above drawbacks and provide a method for selecting the polarization of the laser beam inside a laser cavity, operating in Q-switching or Mode-Locking regime, having an improved and more efficient performance with respect to the existing solutions.

In this frame, it is the main object of the present invention to provide a method for selecting the polarization of the laser beam inside a laser cavity, which is suitable for use in apparatuses with a high average power, operating in Q-switching or Mode-Locking regime, ensuring high performances and, in particular, a high transmission contrast.

A further object of the present invention is to provide a method for selecting the polarization of the laser beam inside a laser cavity, operating in Q-switching or Mode-Locking regime, which involves negligible absorption or, in general, irrelevant laser light losses when in use in a cavity with a high average power.

A further object of the present invention is to provide a method for selecting the polarization of the laser beam inside a laser cavity, operating in Q-switching or Mode-Locking regime, which has low manufacturing costs and easy operation. In order to achieve such aims, it is the object of the present invention to provide a method for selecting the polarization of the laser beam inside a laser cavity and/or an apparatus incorporating the features of the annexed claims, which form an integral part of the description herein.

Further objects, features and advantages of the present invention will become apparent from the following detailed description and annexed drawings, which are supplied by way of non limiting example, wherein:
- Fig. 1 shows an illustrative diagram of a physical phenomenon utilized by the method for selecting the polarization of the laser beam inside a laser cavity, according to the present invention;
- Fig. 2 shows a basic diagram of a method for selecting the polarization of the laser beam inside a laser cavity, according to the present invention;
- Fig. 3 shows a basic diagram of a further embodiment of the method for selecting the polarization of the laser beam inside a laser cavity, according to the present invention;
- Fig. 4 shows a basic diagram of a further embodiment of the method for selecting the polarization of the laser beam inside a laser cavity, according to the present invention;
- Fig. 5 shows a basic diagram of a further embodiment of the method for selecting the polarization of the laser beam inside a laser cavity, according to the present invention;
- Fig. 6 shows the output power curve of an example of a laser cavity in which selection of the polarization of the laser beam is performed inside a laser cavity according to the present invention;
- Fig. 7 shows a trend of the power and polarization change of the laser beam of a laser cavity according to the present invention upon changing the alignment angle of the optical axis of the resonator;
- Fig. 8 shows a basic diagram of a method for selecting the polarization of the laser beam inside a laser cavity operating in Q-switching regime, according to the present invention.

The inventive idea of the present invention consists substantially of a method for selecting the polarization of the oscillating laser beam inside a discrete-elements solid state laser cavity, which uses the birefringent property of an optical element inside the laser resonator and operates by means of an angular selectivity phenomenon in the alignment of the resonator itself.

It is known that some crystalline materials commonly used inside laser systems are featured by a strong birefringence, among which the following categories are recalled:
- non linear crystals utilized for parametric interactions and generation of higher harmonics, such as but not limited to KTP, BBO, LBO, KTA, RTA, RTP, LiNbO.
- birefringent active materials, such as but not limited to Nd:YVO₄, Nd:GdVO₄, Nd:YLF, Nd:SFAP and Yb:SFAP, Nd:BYF and Yb:BYF, Nd:KGW and Yb:KGW.
- birefringent undoped crystals, such as but not limited to YVO₄, GdVO₄, sapphire, etc.

For the purposes of the method according to the present invention, by birefringent material it should be intended any medium with optical anisotropy or a finite difference between the values of the refractive indexes measured along various directions inside the medium, said anisotropy being natural or induced by any external actions; interest is put in the materials having transparency at one or more of the laser wavelengths of the laser cavity where polarized oscillation is desired. The value of the refractive index pertaining to the light of a determined wavelength and polarized according to a precise direction inside the anisotropic material can be defined for each one of these materials, using e.g. Sellmeier's approximate equations of the material.

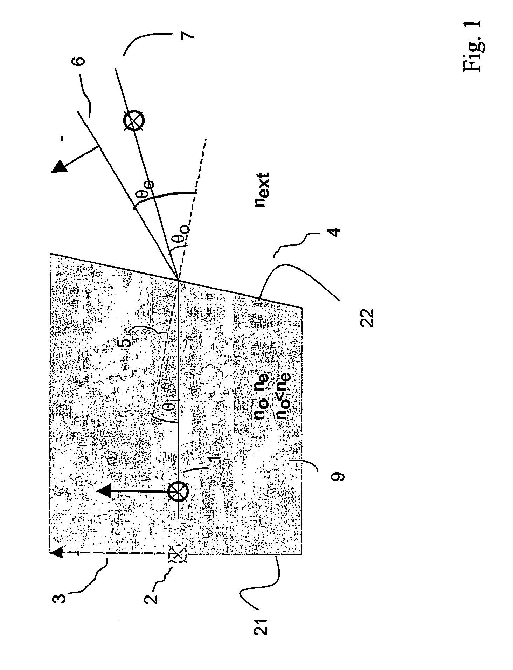

In order to clarify the operation of the method according to the present invention, the double refraction phenomenon is represented in dashed line in Figure 1.

Figure 1 is representing a TEM (Transversal Electro-Magnetic) laser beam 1, with generic polarization. Said laser beam 1 propagates inside an anisotropic material 9 along one of its main polarization axes; the polarization components 2 and 3 of the laser beam 1 lay in a plane perpendicular to its propagation direction and in said section of the anisotropic material 9 it is possible, as well known according to the methods of the classic optics, to define an ellipsoid of the refractive indexes to which the polarization components are subject during propagation. Two main axes of said ellipsoid can be defined with the two relevant values, maximum and minimum, of the refractive index; for the purposes of the method of the present invention, both maximum and minimum values should not coincide; it is also possible to separate the polarization of the laser beam 1 in two components oriented along the two main axes, i.e. the above ordinary component 2 associated to an ordinary refractive index **nₒ** and the extraordinary component 3 associated to an extraordinary refractive index **nₑ**. The different refractive index causes a mutual phase difference of said polarization components 2 and 3 as they further progress in the anisotropic medium 9.

While progressing in the anisotropic medium 9, the laser beam 1 meets a face 22, where by face an optically polished surface is intended, which is crossed or hit by the output laser beam 1 from the anisotropic birefringent medium 9 towards a second medium 4, in this case represented by air, for easiness of example. Should the face 22 interfacing between the anisotropic medium 9 and the second medium 4 be chosen perpendicular to the propagation direction in the anisotropic medium 9, both the polarization components 2 and 3 would leave the medium 9 collinear, with the same direction and phase-shifted.

However, if the face 22 as depicted in Figure 1 is not perpendicular to the propagation direction inside the medium 9, then the so-called double refraction phenomenon will ensue: both the polarized components 2 and 3 follow Snell law, nᵢsenθᵢ=nₑₓₜsenθₑₓₜ, where nᵢ indicates the refractive index of the birefringent medium, θᵢ the angle 5 formed between the propagation direction in the birefringent medium and the normal to the interface surface, next the refractive index of the outside medium (nₑₓₜ = 1 for air) and θₑₓₜ the output angle measured from the normal to the interface surface. Since both main polarization components are associated to two different refractive indexes, nₒ or nₑ, it is clear how the two components of the ordinary and extraordinary polarization 2 and 3 exit the face 22 as two polarized output components 6 and 7, which are angularly separated in the propagation directions by a quantity θₑ-θₒ = arcsen(nₑsenθᵢ /nₑₓₜ)- arcsen(nₒsenθᵢ /nₑₓₜ) and out of phase. It is obvious how the angular separation will be the more pronounced: the higher the difference between the refractive indexes nₒ or nₑ ; the higher the incidence angle to the interface θ_{I}; and the higher the ratio between the average value of the anisotropic material indexes and the refractive index of the external medium (air, with n=1 is a preferred material for such an interface). Also, the angular separation is at its maximum when one of the main directions, **nₒ** (ordinary) or **nₑ** (extraordinary), lays in the plane in which the angle between the normal to the interface and the propagation direction is defined, and in the event of a plane interface, the other one lays in the plane of the interface.

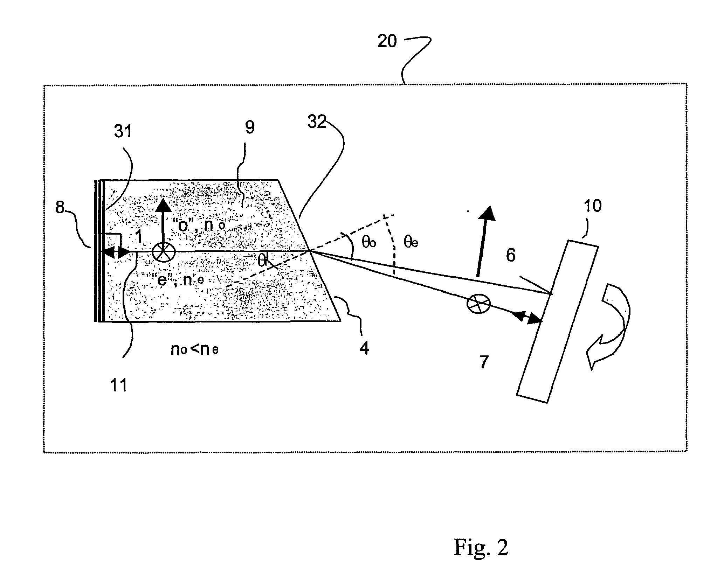

In Figure 2 a basic diagram illustrates the method according to the present invention. Therefore, Figure 2 is representing a resonant cavity 20 or ideal resonator, delimited by a mirror 8 placed on a first face 31 of the birefringent anisotropic material 9 and by a second mirror 10 in the air at a pre-selected distance from the anisotropic material 9. The anisotropic material 9 is contained in the resonant cavity 20 delimited by the two mirrors 8 and 10.

Both the position and orientation of the first mirror 8 constrain the resonance direction of the cavity 20 in a first direction 11 exactly perpendicular to the plane of said mirror 8. The anisotropic medium 9 has optical anisotropy in the plane perpendicular to such a direction 11, while a second face 32 of the anisotropic material 9, forming the interface with the air 4 is inclined by an angle θᵢ with respect to such a direction 11. It is quite clear that the ideal resonant cavity 20 so delimited has two different configurations corresponding to two resonance conditions upon changing the orientation of the mirror in the air 10: a first condition in which the position of the mirror in the air 10 is apt to reflect the ordinary polarization component 6 along an optical path towards the face 32, so that inside the anisotropic material 9 said component 6 will be aligned along the direction 11; a second condition in which the position of the mirror 10 is apt to operate such a reflection for the extraordinary polarization component 7.

Therefore, it is obvious that choosing one of the two resonance orientations for the mirror 10, will automatically exclude oscillation in the remaining direction, therefore the cavity 20 allows oscillation of one main polarization direction alone at a time; accordingly, a device appropriately manufactured according to this method ensures a maximum possible contrast in selecting the polarization.

The choice of one or the other polarization merely depends on the re-alignment of one mirror, i.e. mirror 10. It is also clear that such a choice can be executed maintaining the mirror 10 fixed and re-aligning the mirror 8, along with the birefringent material 9.

The necessary condition of the method according to the present invention is to have an interfacing surface inside the cavity 20, namely the second face 32, between an optical anisotropic material 9 and another optical medium, such as the air in the example, crossed by the laser beam 1 generated in the cavity, said interfacing surface being deliberately non perpendicular to the propagation direction 11 of said laser beam 1.

This condition is also sufficient in case no element inside the resonant cavity 20 is in a position to cancel the angular and/or spatial separation produced by the above interface 32. Most birefringent materials suitable for a practical implementation of the method according to the present invention are already normally utilized inside laser cavities and have irrelevant absorptions and losses for the radiation oscillating in the resonator.

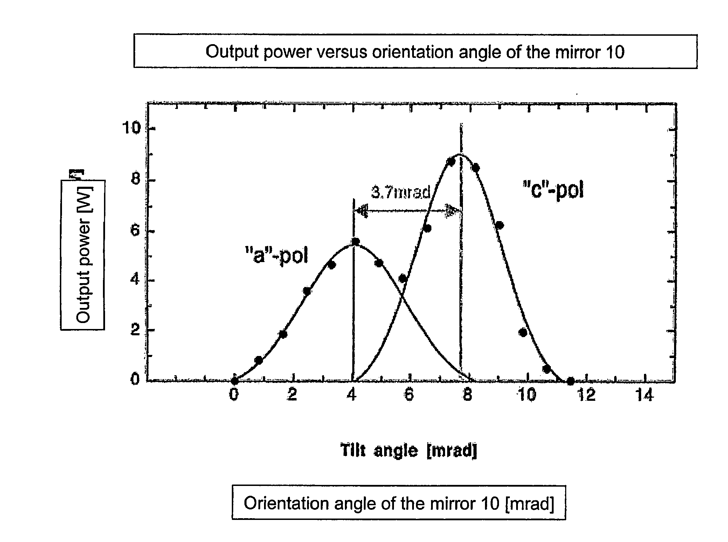

The method depicted in Figure 2 can be easily applied to a real laser cavity by evaluating an appropriate sensitivity parameter for the misalignment of the cavity 20 itself, which can be defined as the inverse of the minimum deviation angle of a mirror (or other optical element of the cavity) from its perfect optical alignment, such to cause the extinction of the laser oscillation. See Figure 7 in this connection, as better detailed in the following description. Said sensitivity parameter not only depends on the optical design of the resonant cavity but also on the laser gain of the active medium and on the total losses of the resonator when perfectly aligned. Once this angle is calculated relatively to the polarization-selecting interface, a perfect polarization selection will be obtained with the angular separation between the two components equalling at least twice the extinction angle. On the contrary, when the angular separation is below this value, oscillation of both the polarization components may occur to a higher or lesser amount according to the laser properties of the material associated to the two separate components.

A detailed description of a real implementation of the method according to the present invention follows here below with reference to the diagram of Figure 2.

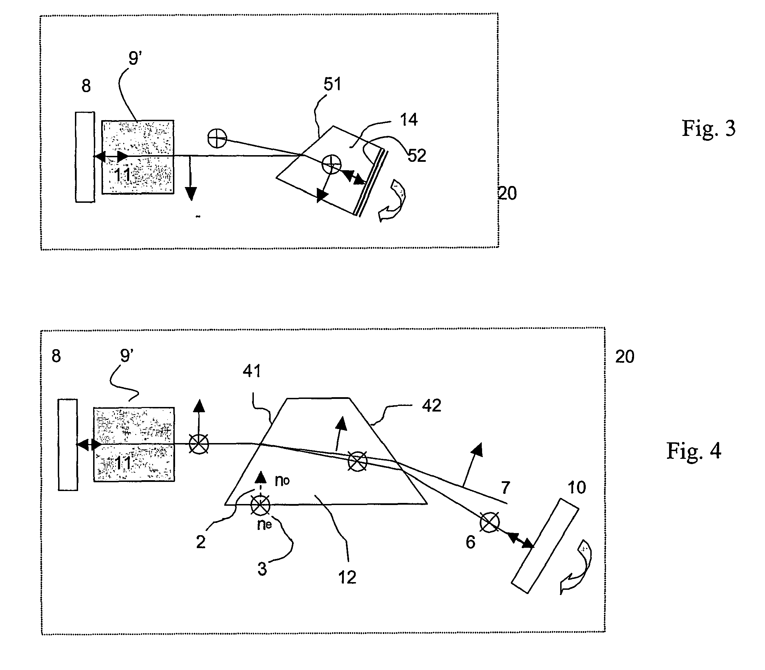

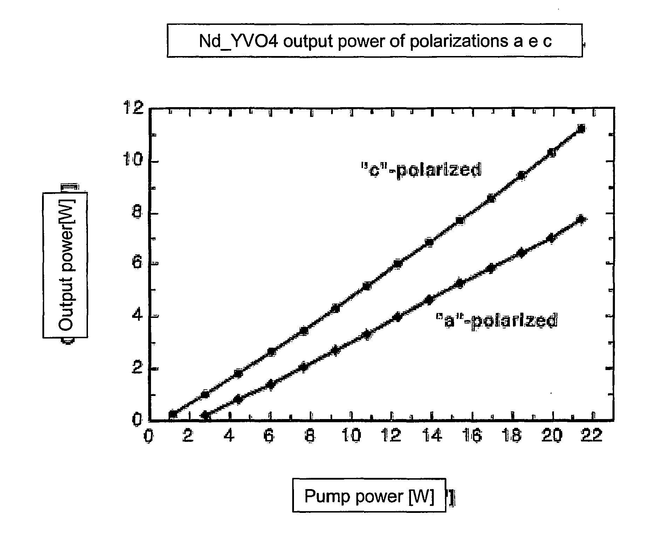

The cavity 20, where the ordinary axis "o" coincides with the crystallographic axis "c" of the crystal forming the anisotropic medium 9 and the extraordinary axis "e" coincides with the crystallographic axis "a" of the medium 9, consists of a Nd:YVO₄ a-cut laser crystal, manufactured according to the scheme of an active birefringent mirror, as further described. This laser crystal has a 4x4 mm² square section along the crystallographic directions "a" and "c", and a 7 mm length along the other longitudinal axis, "a". The first face 31 of the crystal, plane and perpendicular to the longitudinal axis "a", has a high reflecting dielectric coating which make it highly reflecting (reflectivity R>99.5%) at the laser wavelength (in this case, 1064nm) and non reflecting (R<5%) to the pumping wavelength (in this case, 808nm), thus forming the mirror 8. The second face 32 is a plane face inclined with respect to the first face 31, laying the "a"-axis transversally in the plane of the face 32 itself to form an angle of about 1 degree between the "c"-axis and the projection of the latter on the face 32 itself. This second face 32 has a high transmission dielectric coating that makes it non reflecting (transmission T>99.8%) at the wavelength of the laser beam 1. At about 6cm distance from the second face 32 is placed the mirror 10, a plane output coupler mirror, with 20% transmission at 1064nm; the mirror 10 is located on a mechanical mount, not shown, with micrometric angular adjustment around two main axes oriented as "a" and "c" in the laser crystal. The laser crystal is longitudinally-pumped with a fibre-coupled semiconductor laser, supplying over 20W optical power at 808nm. Figure 6 shows the output power trend depending on the pump power for the two different polarizations ("a" and "c") selected with the method according to the present invention; it is highlighted how, with the same working parameters of the resonator, the laser features of the two polarizations are different due to their different laser properties, in particular the stimulated emission cross-sections pertaining to the two crystallographic axes "a" and "c" of Nd:YVO₄. Figure 7 shows (black dots) the trend of the output power versus orientation angle of the output mirror 10 (rotated around the direction "a") at a fixed pump power of about 18W. The two angular resonant zones of the cavity (bell curves), one for polarization "a" and the other for polarization "c", can be clearly noticed as well as the misalignment tolerance with about 18W of the pump power absorbed in the laser crystal. The two resonance peaks are angularly separated by about 3.7 mrad, in very good agreement with the value of 3.63 mrad calculated for an inclination angle of 1 degree of the second face, assuming the values of 2.1652 and 1.9573 calculated at 1064nm for nₑ and nₒ, respectively. It should also be noticed how the laser oscillation does not totally extinguish in going over from one polarization to the other (having a mixed-polarization residue of about 4W); however, near the two resonance peaks, the polarization degree of the output radiation is better than 50:1; this is due to a competitive phenomenon between the two polarizations in exploiting the laser gain: the resonant polarization having less losses in the oscillation, deprives the other one of the gain required for the oscillation. The graph also suggests how increasing the angle between the two faces to about 2 degrees, the angular separation will double, ensuring total extinction of the laser action in the angular zone between the two resonance directions. The method according to the present invention can be utilized for obtaining various device embodiments for use inside a laser resonator, some of which are described in the following. Figure 4 is illustrating an embodiment providing the use of an active material 9' in the resonant cavity 20, which has optical isotropy with respect to the cavity propagation axis 11, obviously emitting unpolarized laser light. In this case, selection of the polarization can be obtained introducing in the cavity 20 a birefringent wedge-shaped element 12 with two faces 41 and 42, both of them inclined (alternatively, only one of them inclined) with respect to the direction 11 of the mode propagation in the resonator 20 and one face inclined with respect to the other. The birefringent element 12 is preferably obtained with the extraordinary main axis of the material laying in the plane of the one face inclined with respect to the direction of the beam propagation, perpendicular to such a direction (i.e. perpendicular to the incidence plane) so as to maximize the angular separation effect provided by the double refraction to the interface (or interfaces) between the birefringent wedge element 12 and the air. If both faces are inclined with respect to the laser beam, the first face 41 separates the polarizations angularly due to double refraction, whereas the second face 42 enhances the angular separation. Preferably, the faces 41 and 42 crossed by the laser radiation have a dielectric anti-reflection coating for the laser wavelength, at the predetermined incidence angle. For small incidence angles (<10°), this dielectric treatment matches a normal anti-reflection treatment for normal incidence, requiring low manufacturing costs. Preferred materials for the element may be GdVO₄, YVO₄ or sapphire, cut for inner light propagation along the direction of maximum index anisotropy for the transverse components of the polarization; in the instance of GdVO₄ and YVO₄, propagation in the material will preferably occur along one of the crystallographic axes "a", fully utilizing the strong index difference between the perpendicular axis "a" and "c"; these materials should be considered preferable for their very good transparency, strong bi-refringence, high average refractive index, high damaging threshold, easy manufacturing of antireflection dielectric coatings, wide market availability and low cost. In another embodiment illustrated in Figure 3, the birefringent element with non parallel faces may be used to operate as a cavity mirror 14, with a face 51 facing inside the cavity 20 fitted with an appropriate antireflection dielectric coating, and the face 52 outside the cavity fitted with a dielectric coating making it totally or partially reflecting at the cavity laser wavelength (or wavelengths), thus defining a "bi-refringent mirror"; in this embodiment, only the face 51 inside the cavity operates a separation of the polarizations, whereas the mirror-machined face 52, appropriately aligned, performs the selection of one or the other polarization component. In the case where the laser material itself is birefringent for the transverse polarization components of the laser radiation propagating in the cavity, the active material may have non parallel faces, such as in the form of a wedge, as suggested above; to this effect, the active material operates an angular separation of the polarizations, whereas an outer optics, such as the mirror 10, for a non limiting example, performs the resonance selection of one of the polarizations.

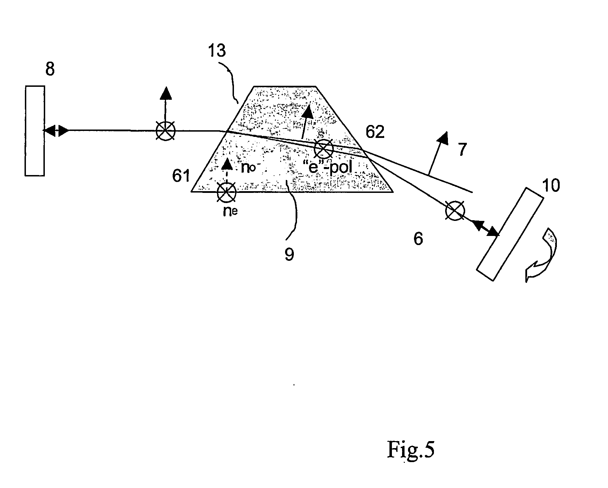

A possible embodiment according to this example as illustrated in Figure 5 has the birefringent laser material 9 in the form of a wedge 13 crossed by the laser beam 1; the faces 61 and 62 being crossed have antireflection dielectric coatings appropriate for the oscillating wavelength and for the predetermined incidence angle.

In the embodiment illustrated in Figure 2, or "active birefringent mirror", on the contrary, the laser crystal forming the anisotropic material 9 is cut with the face 31 perpendicular to the propagation axis, which has a maximum bi-refringence for the transverse polarization components of the laser beam, and with the face 32 inclined with respect to the first one, the plane of such a face 32 containing one of the main axis of the index ellipsoid, in order to maximize the selection effect. The first face is coated with dielectric layers forming the cavity mirror 8, the second face 32 is coated with antireflection dielectric layers for the laser wavelength at the incidence angle defined by the geometry of the element.

In other embodiments, in a laser cavity containing a non linear crystal for altering the cavity frequency, the non linear crystal may be cut with non parallel faces, such as in the form of a wedge, analogously to Figure 4, where the birefringent element 12 may be the non linear crystal and operate as the separator of the oscillating polarization. The faces of the non linear crystal may receive an appropriate non reflecting (or reflecting) dielectric treatment to one or more laser wavelengths in the cavity.

According to another embodiment, in a laser cavity containing an optical modulator (typically for Q-switching or mode-locking) made of an appropriate birefringent material (such as but non limited to LiNbO₃), the modulator element or elements may appropriately have non parallel faces (such as in the form of a wedge), as described in the previous embodiments, analogously to Figure 4, where the birefringent element 12 may be the modulator crystal, in order to perform separation of the main polarizations, whereas selection is performed by one of the mirrors or other optical element forming the cavity. The selection of the beam polarization inside a laser cavity is useful, first of all, because it allows the choice of one or more optical properties of the output beam tied to its polarization state; however, selection of the polarization state of the laser beam is also utilized for inducing desired modulation effects of the cavity losses. If a laser resonator, in fact, contains an element for selecting the polarization state of the beam, that resonator is characterized by irrelevant or anyway very small losses for a laser beam in that determined polarization state only; any optical effect allowing a change of the polarization state of the beam propagating in the cavity (such as rotation of a linear polarization) cannot but increase the typical loss level of the above cavity.

An appropriate introduction of modulable losses for the laser cavity obtained through:
- selection of a polarization according to the method of the present invention, and
- modulation of the polarization of the laser beam propagating in the cavity,
may be used for obtaining operation of laser cavities in Mode-Locking or Q-Switching regime. Normally, but not necessarily, a good Mode-Locking operation can be obtained introducing relatively low periodic losses (a few %) with a time interval in accordance with the 'round trip' period of the laser cavity.

If the polarization selection method, on the contrary, is such to allow oscillation of a determined polarization state (as the subject method) and at the same time prevent oscillation of any laser beam in an orthogonal polarization state, then the loss level that can be introduced through the switching of the polarization to the orthogonal state in the cavity may cause the suppression of the laser oscillation; in these cases, a controlled effect of polarization switching of the laser beam propagating in the cavity would allow going from a low loss situation (maximum output power) to a maximum loss situation (nil output power); this condition is essential for the operation of laser cavities in Q-Switching regime.

A non limiting example of a Q-Switching operating laser cavity is described in the following, in which the losses required (modulable) are obtained using the polarization selection of the method according to the present invention.

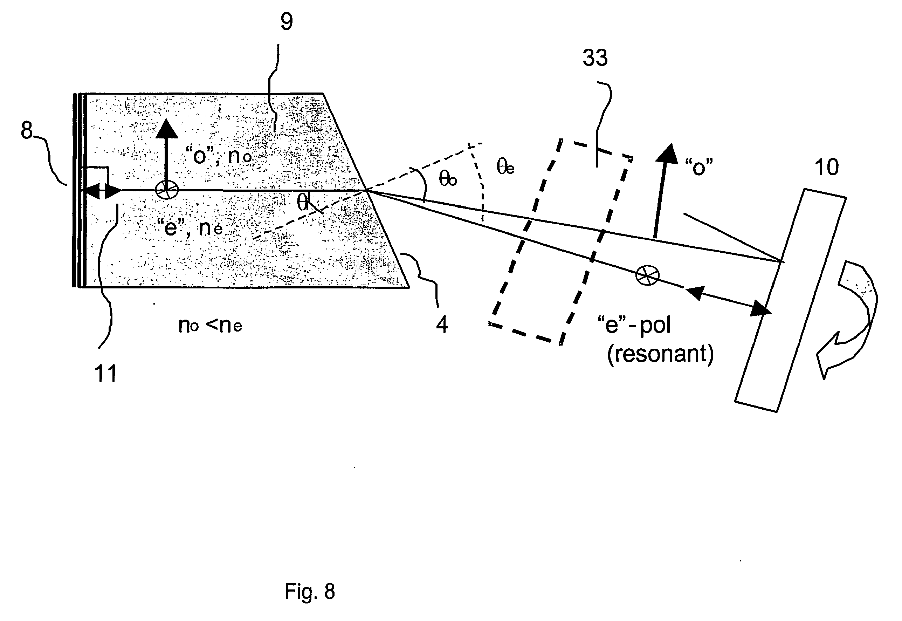

In the cavity depicted in Figure 8, analogous to the one of Figure 2, where the active medium 9 is an active Nd:YVO or Nd:GVO crystal manufactured like an active birefringent mirror, an electro-optical Q-switching modulator 33, consisting typically of one or more crystals apt to rotate the polarization of the laser beam due to the electro-optical effect upon changing electric field applied to the crystal/s, is inserted between the active medium 9 and the mirror 10, in a position that maximizes the efficiency of the resonator (getting maximum output power when the modulator is off, i.e. subject to a nil electric field). Aligning the mirror 10 for the resonance of the "c"-polarized beam and keeping no voltage applied to the modulator, the cavity can operate with irrelevant losses. Applying the appropriate "λ/4" voltage to the modulator, the latter rotates the beam polarization by 90 degrees when the laser beam travels from the crystal 9 to the mirror 10 and back again to the crystal 9. Since the resonator is not aligned for the polarization of the beam going back to the crystal 9, the laser will totally extinguish. Alternating the control voltage, the laser operates in perfect Q-switching regime, without having to use the conventional polarizer element normally utilized in the prior art. In this case, the advantage of the present method for obtaining Q-Switching operating cavities is important, since it eliminates the conventional polarizer element normally considered critical in high gain lasers; in fact, manufacture of polarizers with a high extinction grade for the polarization to be suppressed, irrelevant losses for the transmitted polarization and a high resistance to optical damage, represents an exceptional or, in some instances, impossible feat. From the above description the features of the present invention as well as the relevant advantages thereof are clear.

Advantageously, the method for selecting the polarization of the laser beam inside a laser cavity according to the present invention allows choosing one or the other polarization component simply depending on the re-alignment of the resonator. In particular, it can be noticed how according to the method of the present invention, separation of the polarizations and selection of the oscillating polarization are two independent processes, obtainable, at the limit, with just one birefringent optical element and, above all, when compared to the conventional methods the selection depends exclusively on the optical alignment of the resonator. Also, the proposed method is based on creating different resonance conditions of the same oscillator, each one of them selectable through the optical alignment of the latter. Moreover, advantageously, most birefringent materials suitable for practical implementation of the method for selecting the polarization of the laser beam inside a laser cavity according to the present invention are already normally used inside laser cavities and have irrelevant absorption and losses for the oscillating radiation in the resonator.

The method for selecting the polarization of the laser beam inside a laser cavity according to the present invention can be easily extended from ideal models to a real laser cavity, by evaluating an appropriate sensitivity parameter for the misalignment of the cavity itself; when sizing a real device according to the present method, this parameter is used for controlling the oscillation of one or both the polarization components, in a higher or minor quantity according to the laser properties of the material associated to the two separate components.

It is obvious that many changes are possible for the man skilled in the art to the method for selecting the polarization of the laser beam inside a laser cavity described above by way of example, without departing from the novelty spirit of the innovative idea, and it is also clear that in practical actuation of the invention the components may often differ in form and size from the ones described and be replaced with technical equivalent elements.

## Claims

1. A method for selecting the polarization of a laser beam inside a resonant laser cavity operating in Q-switching or Mode-Locking regime, the method provides generation of a laser beam (1) inside said resonant laser cavity (20), comprising an electro-optical modulator and optical media (8,10,9;9',12;9',14;13;33),
**characterized in that**
said optical media include a wedge shaped birefringent optical medium (9;12;14;13), that is used for inducing a double refraction effect on the laser beam (1) and, on the interface (22;32;41,42;51,52;61,62) between said birefringent optical medium (9;12;14;13) and a second medium with a different refractive index, separating propagation directions of different polarization components (2,3) of the laser beam (1), providing a plurality of resonance directions (6,7) which are distinct for the different polarization components (2, 3), and **in that**
an optical axis of the cavity (20) is selectively aligned on one of said resonance directions (6,7) through the adjustment of the position of one or more optical elements (8,9,10;9',12;9',14;13,33) forming said resonant laser cavity (20) so as to modulate the loss state of the resonant laser cavity in cooperation with the electro-optical modulator.

2. A method, according to claim 1, wherein inside said resonant laser cavity (20) the plurality of resonance directions (6,7) corresponds to a plurality of different optical paths enabling a particular polarization.

3. A method, according to claim 2, wherein it provides for introducing a controlled quantity of losses individually experimented by one or both the polarizations in a well delimited path in the resonant laser cavity (20).

4. A method, according to claim 2, wherein said wedge shaped birefringent optical medium is a birefringent active laser material used for producing the separated polarization components.

5. A method, according to claim 2, wherein said wedge shaped birefringent optical medium is a non linear crystal for producing the separated polarization components.

6. A method, according to claim 2, wherein said resonant laser cavity (20) contains a Q-switching or Mode-Locking optical modulator, whose birefringent active optical element is used for producing the separated polarization components.

7. A method, according to claim 1, wherein it uses more than one interface between the birefringent medium and another medium for separating the polarizations.

8. A method, according to claim 1, wherein it provides for selecting the polarization through the alignment of a mirror (10;52) pertaining to the optical media of said resonant laser cavity (20).

9. A method, according to claim 1, wherein it verifies the resonance of a polarization and avoids total extinction of other possible polarizations.

10. A method, according to claim 1, wherein it verifies the resonance of a polarization and maintains the simultaneous oscillation of a well controlled fraction of other possible polarizations.

11. A laser system operating in Q-switching or Mode-Locking regime of the type comprising a laser beam (1) generated in a resonant laser cavity (20), said resonant laser cavity (20) comprising an electro-optical modulator, and optical media (8,10,9;9',12;14;13;33), **characterized in that** said optical media include a wedge shaped optical medium (9;12;14;13) with bi-refringence properties that is adapted to produce a double refraction for polarized components (2,3) of said beam (1) and multiple resonance conditions (6,7) of the resonant laser cavity (20), and **in that** said resonant laser cavity (20) is aligned on one of said resonance directions (6,7) by means of one or more optical elements (8,10,9;9',12;14;13;33) forming it, for selecting a specific polarization component and modulating the loss state of the resonant laser cavity in cooperation with the electro-optical modulator.

12. A laser system according to claim 11, wherein said resonant laser cavity (20) contains a birefringent mirror (14), consisting of birefringent material with non parallel faces, with a first face (51) inside the resonant laser cavity (20) and a second face (52) machined as a mirror, said first face (51) being angled with respect to the second, in a position to operate the separation process of the polarizations, and select them on the desired resonance position (6,7) through the alignment of the mirror itself, or any another optical element (8,10,9;9',12;14;13;33) of the resonant laser cavity (20).

13. A laser system according to claim 11, wherein said cavity contains an active birefringent mirror (9), consisting of birefringent material with non parallel faces, with a face (32) placed inside the cavity and a second face (31) machined as a mirror as described above in a position to operate the separation process of the polarizations, and select them on the desired resonance position (6,7) through the alignment of the mirror itself or any other optical element (8,10,9;9',12; 14;13;33) of the resonant laser cavity (20), and at the same time provide a laser gain to the cavity (20).

14. A laser system according to claim 11, wherein said cavity (20) contains a birefringent device (12,13), consisting of birefringent material with non parallel faces, the first face (41,61) being angled with respect to the second (42;62) in a position to operate the separation process of the polarizations, and their selection by means of rotation around one of its own axis or realignment of any other optical element (8,10,9;9',12,14;13;33) of said resonant laser cavity (20).

15. A laser system according to one of claims from 12 to 14, wherein the birefringent material is YLF or Nd:YLF or GdVO₄ or YVO₄ or Nd:GdVO₄ or Nd:YVO₄.

## Patentansprüche

1. Verfahren zum Selektieren der Polarisation eines Laserstrahls innerhalb einer resonanten Laserkavität, die in einer Güteschaltungs- oder Modenkopplungsanordnung betrieben wird, wobei das Verfahren einen Laserstrahl (1) innerhalb der resonanten Laserkavität (20) erzeugt, die einen elektrooptischen Modulator und optische Medien (8, 10, 9; 9', 12; 9', 14; 13; 33) aufweist,
**dadurch gekennzeichnet, dass**
die optischen Medien ein keilförmiges doppelbrechendes optisches Medium (9; 12; 14; 13) umfassen, das verwendet wird, um einen Doppelbrechungseffekt in dem Laserstrahl (1) und auf der Übergangsfläche (22; 32; 41, 42; 51, 52; 61, 62) zwischen dem doppelbrechenden optischen Medium (9; 12; 14; 13) und einem zweiten Medium mit einem unterschiedlichen Brechungsindex zu induzieren, Ausbreitungsrichtungen unterschiedlicher Polarisationskomponenten (2, 3) des Laserstrahls (1) zu separieren und eine Mehrzahl von Resonanzrichtungen (6, 7), die für die unterschiedlichen Polarisationskomponenten (2, 3) verschieden sind, bereitzustellen, wobei
eine optische Achse der Kavität (20) selektiv auf eine der Resonanzrichtungen (6, 7) durch die Justierung der Position von einem oder mehreren optischen Elementen (8, 9, 10; 9', 12; 9', 14; 13, 33), die die resonante Laserkavität (20) ausbilden, ausgerichtet wird, um den Verlustzustand der resonanten Laserkavität im Zusammenspiel mit dem elektrooptischen Modulator zu modulieren.

2. Verfahren nach Anspruch 1, **dadurch gekennzeichnet, dass** die Mehrzahl von Resonanzrichtungen (6, 7) innerhalb der resonanten Laserkavität (20) einer Mehrzahl von unterschiedlichen optischen Pfaden entspricht, die eine bestimmte Polarisation ermöglichen.

3. Verfahren nach Anspruch 2, **dadurch gekennzeichnet, dass** es vorsieht, eine kontrollierte Verlustmenge, die individuell durch eine oder beide Polarisationen experimentell bestimmt worden ist, in einem gut begrenzten Pfad in der resonanten Laserkavität (20) einzuführen.

4. Verfahren nach Anspruch 2, **dadurch gekennzeichnet, dass** das keilförmige doppelbrechende optische Medium ein doppelbrechendes aktives Lasermaterial ist, das zum Erzeugen der separaten Polarisationskomponenten verwendet wird.

5. Verfahren nach Anspruch 2, **dadurch gekennzeichnet, dass** das keilförmige doppelbrechende optische Medium ein nicht-linearer Kristall zum Erzeugen der separaten Polarisationskomponenten ist.

6. Verfahren nach Anspruch 2, **dadurch gekennzeichnet, dass** die resonante Laserkavität (20) einen Güteschaltungs- oder Modenkopplungsmodulator enthält, dessen doppelbrechendes aktives optische Element verwendet wird, um die separaten Polarisationskomponenten zu erzeugen.

7. Verfahren nach Anspruch 1, **dadurch gekennzeichnet, dass** es mehr als eine Übergangsfläche zwischen dem doppelbrechenden Medium und einem anderen Medium zum Separieren der Polarisationen verwendet.

8. Verfahren nach Anspruch 1, **dadurch gekennzeichnet, dass** es vorsieht, die Polarisation durch die Ausrichtung eines Spiegels (10; 52) zu selektieren, der zu den optischen Medien der resonanten Laserkavität (20) gehört.

9. Verfahren nach Anspruch 1, **dadurch gekennzeichnet, dass** es die Resonanz einer Polarisation verifiziert und eine totale Auslöschung anderer möglicher Polarisationen vermeidet.

10. Verfahren nach Anspruch 1, **dadurch gekennzeichnet, dass** es die Resonanz einer Polarisation verifiziert und die simultane Schwingung eines gut kontrollierten Teils anderer möglicher Polarisationen aufrechterhält.

11. Lasersystem, das in einer Güteschaltungs- oder Modenkopplungsanordnung von der Art betrieben wird, die einen Laserstrahl (1) aufweist, der in einer resonanten Laserkavität (20) erzeugt wird, wobei die resonante Laserkavität (20) einen elektrooptischen Modulator und optische Medien (8, 10, 9; 9', 12; 14; 13; 33) aufweist,
**dadurch gekennzeichnet, dass**
die optischen Medien ein keilförmiges optisches Medium (9; 12; 14; 13) mit doppelbrechenden Eigenschaften umfassen, das angepasst ist, eine Doppelbrechung für polarisierte Komponenten (2, 3) des Strahls (1) und mehrere Resonanzzustände (6, 7) der resonanten Laserkavität (20) zu erzeugen, wobei die resonante Laserkavität (20) auf eine der Resonanzrichtungen (6, 7) mittels einem oder mehreren optischen Elementen (8, 10, 9; 9', 12; 14; 13; 33), die diese bilden, ausgerichtet ist, um eine spezifische Polarisationskomponente zu selektieren und den Verlustzustand der resonanten Laserkavität im Zusammenspiel mit dem elektrooptischen Modulator zu modulieren.

12. Lasersystem nach Anspruch 11, **dadurch gekennzeichnet, dass** die resonante Laserkavität (20) einen doppelbrechenden Spiegel (14) enthält, der ein doppelbrechendes Material mit nicht parallelen Flächen mit einer ersten Fläche (51) innerhalb der resonanten Laserkavität (20) und eine zweite Fläche (52), die als Spiegel bearbeitet ist, aufweist, wobei die erste Fläche (51) bezüglich der zweiten in einer Stellung abgewinkelt ist, um den Prozess der Separierung der Polarisationen durchzuführen und diese auf der gewünschten Resonanzposition (6, 7) durch das Ausrichten des Spiegels selbst oder jedes anderen optischen Elements (8, 10, 9; 9', 12; 14; 13; 33) der resonanten Laserkavität (20) zu selektieren.

13. Lasersystem nach Anspruch 11, **dadurch gekennzeichnet, dass** die Kavität einen aktiven doppelbrechenden Spiegel (9), der aus einem doppelbrechenden Material mit nicht parallelen Flächen mit einer Fläche (32), die innerhalb der Kavität angeordnet ist, und einer zweiten Fläche (31), die als Spiegel bearbeitet ist, wie oben beschrieben in einer Position enthält, um den Prozesses der Separierung der Polarisationen durchzuführen, diese auf der gewünschten Resonanzposition (6, 7) durch die Ausrichtung des Spiegels selbst oder eines anderen optischen Elements (8, 10, 9; 9', 12; 14; 13; 33) der resonanten Laserkavität (20) zu selektieren und gleichzeitig eine Laserverstärkung für die Kavität (20) bereitzustellen.

14. Lasersystem nach Anspruch 11, **dadurch gekennzeichnet, dass** die Kavität (20) ein doppelbrechendes Mittel (12, 13) aufweist, das aus einem doppelbrechenden Material mit nicht parallelen Flächen besteht, wobei die erste Fläche (41, 61) bezüglich der zweiten (42; 62) in einer Position abgewinkelt ist, um den Prozess des Separierens der Polarisationen und deren Selektion mittels einer Rotation um eine seiner eigenen Achsen oder einer Neuausrichtung von einem der anderen optischen Elemente (8, 10, 9; 9', 12, 14; 13; 33) der resonanten Laserkavität (20) durchzuführen.

15. Lasersystem nach einem der Ansprüche 12 bis 14, **dadurch gekennzeichnet, dass** das doppelbrechende Material YLF oder Nd:YLF oder GdVO₄ oder YVO₄ oder Nd:GdVO₄ oder Nd:YVO₄ ist.

## Revendications

1. Procédé de sélection de la polarisation d'un faisceau laser à l'intérieur d'une cavité laser résonnante fonctionnant dans un régime à commutation de Q ou à Verrouillage de Modes, le procédé fournit la production d'un faisceau laser (1) à l'intérieur de ladite cavité laser résonnante (20), comprenant un modulateur électro-optique et des milieux optiques (8, 10, 9 ; 9', 12; 9', 14 ; 13 ; 33),
**caractérisé en ce que**
lesdits milieux optiques comportent un milieu optique biréfringent configuré sous forme de coin (9; 12; 14 ; 13), lequel est utilisé pour induire un effet de double réfraction sur le faisceau laser (1), et sur l'interface (22 ; 32; 41, 42 ; 51, 52 ; 61, 62) entre ledit milieu optique biréfringent (9 ; 12 ; 14 ; 13) et un second milieu doté d'un indice de réfraction différent, séparant les directions de propagation des composantes de polarisation différentes (2, 3) du faisceau laser (1), fournissant une pluralité de directions de résonance (6, 7) qui sont distinctes pour les composantes de polarisation différentes (2, 3), et **en ce que**
un axe optique de la cavité (20) est aligné de façon sélective sur l'une desdites directions de résonance (6, 7) par le réglage de la position d'un ou de plusieurs éléments optiques (8, 9, 10, 9', 12, 9', 14 ; 13, 33) formant ladite cavité laser résonnante (20) de façon à moduler l'état des pertes de la cavité laser résonnante en coopération avec le modulateur électro-optique.

2. Procédé selon la revendication 1, dans lequel, à l'intérieur de ladite cavité laser résonnante (20), la pluralité des directions de résonance (6, 7) correspond à une pluralité de chemins optiques différents permettant une polarisation particulière.

3. Procédé selon la revendication 2, dans lequel il est prévu d'introduire une quantité contrôlée de pertes subies individuellement par l'une des, ou par les deux, polarisations dans un chemin bien délimité dans la cavité laser résonante (20).

4. Procédé selon la revendication 2, dans lequel ledit milieu optique biréfringent configuré sous forme de coin est un matériau laser actif biréfringent utilisé pour produire les composantes de polarisation séparées.

5. Procédé selon la revendication 2, dans lequel ledit milieu optique biréfringent configuré sous forme de coin est un cristal non linéaire permettant de produire les composantes de polarisation séparées.

6. Procédé selon la revendication 2, dans lequel ladite cavité laser résonnante (20) contient un modulateur optique à commutation de Q ou à Verrouillage de Modes dont un élément optique actif biréfringent est utilisé pour produire les composantes de polarisation séparées.

7. Procédé selon la revendication 1, dans lequel il est utilisé plus d'une interface entre le milieu biréfringent et un autre milieu pour séparer les polarisations.

8. Procédé selon la revendication 1, dans lequel il est prévu de sélectionner la polarisation par l'intermédiaire de l'alignement d'un miroir (10 ; 52) appartenant au milieu optique de ladite cavité laser résonnante (20).

9. Procédé selon la revendication 1, dans lequel on vérifie la résonance d'une polarisation et on évite l'extinction totale des autres polarisations possibles.

10. Procédé selon la revendication 1 dans lequel on vérifie la résonance d'une polarisation et on maintient l'oscillation simultanée d'une fraction bien contrôlée des autres polarisations possibles.

11. Système laser fonctionnant en régime à commutation de Q ou à Verrouillage de Modes du type comportant un faisceau laser (1) généré dans une cavité laser résonnante (20), ladite cavité laser résonnante (20) comprenant un modulateur électro-optique, et des milieux optiques (8, 10, 9 ; 9', 12 ; 14; 13; 33),
**caractérisé en ce que** lesdits milieux optiques comprennent un milieu optique configuré en forme de coin (9; 12; 14; 13) doté de propriétés de biréfringence lequel est adapté pour produire une double réfraction pour des composantes polarisées (2, 3) dudit faisceau (1) et des conditions de résonance multiple (6, 7) de la cavité laser résonnante (20), et **en ce que** ladite cavité laser résonnante (20) est alignée sur l'une desdites directions de résonance (6, 7) au moyen d'un ou de plusieurs éléments optiques (8, 10, 9 ; 9', 12; 14; 13; 33) la formant, en vue de sélectionner une composante de polarisation spécifique et de moduler l'état de pertes de la cavité laser résonante en coopération avec le modulateur électro-optique.

12. Système laser selon la revendication 11, dans lequel ladite cavité laser résonante (20) contient un miroir biréfringent (14), constitué d'un matériau biréfringent doté de faces non parallèles, une première face (51) à l'intérieur de la cavité laser résonnante (20) et une seconde face (52) usinée comme un miroir, ladite première face (51) étant inclinée par rapport à la seconde, dans une position pour opérer le processus de séparation des polarisations, et les sélectionner sur la position de résonance souhaitée (6, 7) par l'alignement du miroir lui-même, ou de tout autre élément optique (8, 10, 9, 9', 12 ; 14 ; 13 ; 33) de la cavité laser résonnante (20).

13. Système laser selon la revendication 11, dans lequel ladite cavité contient un miroir biréfringent actif (9), constitué d'un matériau biréfringent présentant des faces non parallèles, une face (32) étant placée à l'intérieur de la cavité et une seconde face (31) usinée comme un miroir tel que décrit ci-dessus dans une position destinée à opérer le processus de séparation des polarisations, et à les sélectionner sur la position de résonance souhaitée (6, 7) à travers l'alignement du miroir lui-même ou de tout autre élément optique (8, 10, 9 ; 9', 12 ; 14 ; 13; 33) de la cavité laser résonnante (20), et à fournir en même temps un gain de laser à la cavité (20).

14. Système laser selon la revendication 11, dans lequel ladite cavité (20) contient un dispositif biréfringent (12, 13), constitué d'un matériau biréfringent présentant des faces non parallèles, la première face (41, 61) étant inclinée par rapport à la seconde (42 ; 62) dans une position visant à opérer le processus de séparation des polarisations, et leur sélection au moyen d'une rotation autour de l'un de ses propres axes ou d'un réalignement de tout autre élément optique (8, 10, 9 ; 9', 12, 14 ; 13 ; 33) de ladite cavité laser résonnante (20).

15. Système laser selon l'une des revendications 12 à 14, dans lequel le matériau biréfringent est YLF ou Nd:YLF, ou GdVO₄ ou YVO₄ ou Nd:GdVO₄ ou Nd:YVO₄.
